# EUROPÄISCHE PATENTSCHRIFT

(11) **EP 3 541 567 B1**
(45) Veröffentlichungstag und Bekanntmachung des Hinweises auf die Patenterteilung: **25.08.2021**
(21) Anmeldenummer: 17804114.1
(22) Anmeldetag: 13.11.2017
(51) Int. Cl.: B23K 26/06, B23K 26/242

(54) **TIEFSCHWEISSEN EINES WERKSTÜCKS DURCH EINSTRAHLEN EINES LASERSTRAHLS IN DIE VON EINEM ANDEREN LASERSTRAHL ERZEUGTE KAPILLARÖFFNUNG**
METHOD OF DEEP WELDING A WORKPIECE BY INJECTING A LASER BEAM INTO THE CAPILLARY OPENING PRODUCED BY ANOTHER LASER BEAM
PROCÉDÉ DE SOUDAGE PROFOND PAR LASER D'UNE PIÈCE PAR INJECTION D'UN FAISCEAU LASER DANS L'OUVERTURE CAPILLAIRE PRODUITE PAR UN AUTRE FAISCEAU LASER

(30) Priorität: 15.11.2016 DE 102016222357
(43) Veröffentlichungstag der Anmeldung: 25.09.2019
(60) Teilanmeldung: 21185765.1
(73) Patentinhaber: Trumpf Laser- und Systemtechnik GmbH, 71254 Ditzingen (DE)
(72) Erfinder: HAUG, Patrick, 70839 Gerlingen (DE); SPEKER, Nicolai, 74385 Pleidelsheim (DE)
(74) Vertreter: Kohler Schmid Möbus Patentanwälte
(86) Internationale Anmeldenummer: PCT/EP2017/079071
(87) Internationale Veröffentlichungsnummer: WO 2018/091417

(56) Entgegenhaltungen:
- DE-A1- 19 933 825
- JP-A- 2004 154 813

## Beschreibung

Die Erfindung betrifft ein Verfahren zum Tiefschweißen eines Werkstücks, wobei mit einem ersten Laserstrahl und einem zweiten Laserstrahl eine Oberfläche des Werkstücks bestrahlt wird,
wobei in einer Werkstückoberflächenebene eine erste Strahlbreite B1 des ersten Laserstrahls größer ist als eine zweite Strahlbreite B2 des zweiten Laserstrahls,
und wobei zumindest in der Werksstückoberflächenebene der zweite Laserstrahl innerhalb des ersten Laserstrahls liegt,
wobei die Intensität des ersten Laserstrahls allein ausreicht, um eine Dampfkapillare im Werkstück zu erzeugen,
und wobei die im Werkstück erzeugte Dampfkapillare in der Werkstückoberflächenebene eine Kapillarbreite KB aufweist,
wobei KB im Wesentlichen genauso groß ist wie B1, und weiter gilt B2 ≤ 0,75*KB.

Ein solches Verfahren ist aus der JP 2004 154 813 A bekannt geworden.

Durch Laserstrahlschweißen können Werkstücke mit vergleichsweise hoher Geschwindigkeit an einer schmalen Schweißnaht miteinander verbunden werden. In die Werkstücke wird nur relativ wenig Wärmeenergie eingebracht, so dass kein oder nur geringer thermischer Verzug auftritt.

Beim Lasertiefschweißen wird das Werkstückmaterial nicht nur oberflächlich angeschmolzen, sondern es bildet sich im Schmelzbad eine Dampfkapillare in Strahlrichtung aus. Dadurch kann die Laserstrahlung in größere Tiefen vordringen, wodurch stärkere Verbindungen zwischen Werkstücken erzeugt werden können.

Mit Laserstrahlen hoher Güte, d.h. einem kleinen Strahlparameterprodukt (definiert als Öffnungswinkel * Radius des Laserstrahls an der dünnsten Stelle, oft abgekürzt SPP) kann eine besonders große Einschweißtiefe erreicht werden. Andererseits kann mit Laserstrahlen geringer Güte, d.h. einem großen Strahlparameterprodukt, eine gute Schweißnahtqualität bei höheren Vorschubgeschwindigkeiten erreicht werden.

Die Qualität der Schweißnaht wird insbesondere durch die Ausbildung von Schweißspritzern beeinträchtigt. Flüssiges Werkstückmaterial wird aus dem Schmelzbad herausgeschleudert, was Kerben in die Schweißnaht einbringt und zu einem Materialverlust in der Schweißnaht führt, wodurch diese mechanisch geschwächt ist, und auch die Umgebung verunreinigt.

Im Stand der Technik wurde versucht, auf die Qualität des Schweißprozesses durch die Verwendung mehrerer Laserstrahlen einzuwirken.

Aus der US 2006/0157457 A1 ist es bekannt geworden, einen ersten und einen zweiten Laserstrahl auf einem Werkstück zu überlagern. Der Spot des zweiten Laserstrahls ist kleiner als der Spot des ersten Laserstrahls, wobei der Spot des zweiten Laserstrahls innerhalb des Spots des ersten Laserstrahls liegt. Der zweite Laserstrahl ist auf die sich bildende Dampfkapillare gerichtet. Das Verfahren soll bei Werkstücken mit hoher Reflektivität eine hohe Schweißtiefe und -weite sowie eine hohe Schweißgeschwindigkeit ermöglichen.

Ähnliche Verfahren, bei denen ein Laserstrahl mit kleinem Spot eine Dampfkapillare erzeugt und von einem weiteren Laserstrahl mit größerem Spot überlagert wird, um auf das umgebende Schweißbad einzuwirken, sind beispielsweise aus der DE 10 2006 011 064 B4, der EP 1 007 267 B1, der DE 197 511 95, der DE 198 59 243 A1 und der JP 45 80065 A bekannt geworden.

Die US 7,807,939 B2 beschreibt ein Laserschweißverfahren, bei dem zwei Laser im zeitlichen Wechsel ein Werkstück bestrahlen.

Aus der JP 2004 358 521 A ist weiterhin eine Laserschweißverfahren bekannt geworden, bei dem Laserstrahlen aus verschiedenen Laserquellen oder derselben Laserquelle überlagert werden und in unterschiedlichen Tiefen des Werkstücks fokussiert werden. Ein ähnliches Verfahren unter Nutzung von Laserquellen mit unterschiedlichen Wellenlängen ist aus der JP 2006 263 771 A bekannt geworden.

Die JP 2003 340 582 A schlägt vor, einen Laserstrahl in einen Hauptstrahl mit geringem Durchmesser und hoher Energie sowie einen Nebenstrahl mit größerem Durchmesser und geringerer Energie zu unterteilen und diese unterschiedlich zu fokussieren. Mit dem Hauptstrahl wird eine Dampfkapillare erzeugt.

Die JP 2004 154 813 A beschreibt ein Laserstrahl-Bearbeitungsverfahren im Tiefschweißregime, bei dem ein erster Laserstrahl und ein zweiter Laserstrahl überlagert werden, wobei ein Spot des zweiten Laserstrahls innerhalb eines Spots des ersten Laserstrahls auf der Oberfläche eines Werkstücks liegt. Der Durchmesser des Spots des zweiten Laserstrahls ist in einer Variante halb so groß wie der Spot des ersten Laserstrahls oder noch kleiner. Der an der Werkstückoberfläche größere, erste Laserstrahl 13 weist einen deutlich größeren Fokussierwinkel auf als der an der Werkstückoberfläche engere, zweite Laserstrahl.

### Aufgabe der Erfindung

Der Erfindung liegt die Aufgabe zugrunde, ein Lasertiefschweißverfahren bereitzustellen, bei dem eine gute Nahtqualität bei großer Einschweißtiefe und hoher Vorschubgeschwindigkeit erreichbar ist.

### Kurze Beschreibung der Erfindung

Diese Aufgabe wird gelöst durch ein Verfahren der eingangs genannten Art, das dadurch gekennzeichnet ist,
dass für einen ersten Fokussierwinkel W1 des ersten Laserstrahls und einen zweiten Fokussierwinkel W2 des zweiten Laserstrahls gilt: W2 ≥ W1.

Gemäß der vorliegenden Erfindung wird die Intensität des ersten Laserstrahls so groß gewählt, dass dieser für sich bereits in der Lage ist, eine Dampfkapillare im Werkstück (bzw. an der Grenzfläche von Werkstückteilen, die zu dem Werkstück verbunden werden sollen) zu erzeugen. Entsprechend wird durch den ersten Laserstrahl in der Oberflächenebene des Werkstücks bereits eine Öffnung erzeugt.

Der gegenüber dem ersten Laserstrahl kleinere zweite Laserstrahl kann durch diese Öffnung hindurch gerichtet werden, so dass der zweite Laserstrahl im oberflächennahen Bereich des Werkstücks, meist umfassend zumindest das (bezogen auf die Tiefe im Werkstück) obere Drittel des Werkstücks, nicht auf Schmelze (oder gar festes Werkstückmaterial) trifft. Erst in einem gewissen Abstand von der Werkstückoberfläche, meist in einem (bezogen auf die Tiefe im Werkstück) mittleren Drittel und unteren Drittel der Dampfkapillare kommt es zu Absorptionen und Reflektionen des zweiten Laserstrahls an der Grenzfläche der Dampfkapillare zum umgebenden Schmelzbad, wobei Energie abgegeben wird.

Der zweite Laserstrahl nutzt somit die Öffnung der Dampfkapillare, die durch den ersten Laserstrahl geschaffen wird, aus, um ohne (oder nur mit geringem) Energieverlust in eine tiefer gelegene Zone der Dampfkapillare zu gelangen, um dort seine Energie abzugeben.

Die Kapillarbreite KB der Dampfkapillare im Rahmen des erfindungsgemäßen Verfahrens entspricht im Wesentlichen der ersten Strahlbreite B1 des ersten Laserstrahls (betrachtet in der Werkstückoberflächenebene); meist gilt hierbei |KB-B1|≤0,2*B1, bevorzugt |KB-B1|≤0,15*B1, und oft auch |KB-B1|≤0,1*B1. In vielen Fällen gilt auch B1≤KB.

Durch den geringen Energieeintrag, im Vergleich zu einem einzelnen Laserstrahl, im oberen Bereich des Werkstücks nimmt die Schmelzflussdynamik im oberen Teil des Schmelzbades ab. Die Fließgeschwindigkeiten der Schmelze werden reduziert, und die Neigung zu Turbulenzen wird geringer. Dies reduziert wiederum die Spritzerbildung bzw. kann für eine höhere Vorschubgeschwindigkeit beim Laserschweißprozess genutzt werden. Gleichzeitig kann durch den zweiten Laserstrahl in größeren Tiefen viel Energie bereitgestellt werden, wodurch die Einschweißtiefe im Vergleich zu einem einzelnen Laserstrahl geringer Strahlgüte vergrößert werden kann, und zudem wird eine schlanke Nahtform erreicht.

Gemäß der Erfindung gilt für einen ersten Fokussierwinkel W1 des ersten Laserstrahls und einen zweiten Fokussierwinkel W2 des zweiten Laserstrahls W2 ≥ W1 . Insbesondere bei einer gemeinsamen Fokusposition unter der Werkstückstückoberfläche kann dann in der Regel ein unerwünschter Kontakt des zweiten Laserstrahls mit der Schmelze nahe der Werkstückoberfläche vermieden werden. Zudem kann oft eine (im Vergleich zum ersten Laserstrahl) besonders enge Strahlkaustik des zweiten Laserstrahls eingerichtet werden.

Im Rahmen der Erfindung kann eine vorgegebene Einschweißtiefe bei guter Nahtqualität mit geringerer Laserleistung erreicht werden als im Stand der Technik. Dadurch wird die Energieeffizienz gesteigert, so dass die Betriebskosten und Investitionskosten gesenkt werden können. Zusätzlich führt die gezieltere Energieeinkopplung zu geringerer Wärmeeinbringung in das Werkstück (Bauteil) und reduziert somit Eigenspannungen und Werkstückverzug.

Die Intensität des ersten Laserstrahls reicht typischerweise gerade dazu aus, um mit dem ersten Laserstrahl allein eine (stabile) Dampfkapillare im Werkstück zu erzeugen; typischerweise ist die Intensität des ersten Laserstrahls maximal doppelt so hoch wie nötig, um mit dem ersten Laserstrahl allein eine stabile Dampfkapillare zu erzeugen.

Die angegebenen Verhältnisse für die Breiten (etwa B1, B2, KB) gelten zumindest entlang der Vorschubrichtung (Schweißrichtung) des Laserschweißprozesses, und typischerweise auch bezüglich jeder Richtung innerhalb der (oder parallel zur) Werkstückoberflächenebene. Bevorzugt gilt im Rahmen der Erfindung auch B2 ≤ 0,5*KB oder auch B2 ≤ 0,4*KB oder sogar B2 ≤ 0,3*KB. Auch gilt bevorzugt B2 ≤ 0,5*B1 oder B2 ≤ 0,4*B1.

Der erste und der zweite Laserstrahl können mit einer gemeinsamen Laserquelle oder auch mit separaten Laserquellen erzeugt werden. Typischerweise sind der erste Laserstrahl und der zweite Laserstrahl koaxial. Man beachte, dass (in der Werkstückoberflächenebene) der zweite Laserstrahl mit dem ersten Laserstrahl überlappen kann, oder auch der erste Laserstrahl den zweiten Laserstrahl ringförmig umschließen kann.

### Bevorzugte Varianten der Erfindung

Bei einer bevorzugten Variante des erfindungsgemäßen Verfahrens haben der erste Laserstrahl und der zweite Laserstrahl bezüglich einer z-Richtung, die senkrecht zur Oberfläche des Werkstücks verläuft, die gleiche Fokuslage oder um weniger als 1mm voneinander beabstandete Fokuslagen. In diesem Fall kann eine besonders einfache, insbesondere gemeinsame Abbildungsoptik für beide Laserstrahlen genutzt werden. Zudem kann meist eine Einbringung der Energie des zweiten Laserstrahls in besonders großer Tiefe erfolgen; das Strahlprofil des zweiten Laserstrahls kann den durch den ersten Laserstrahl geschaffenen freien Raum der Dampfkapillare optimal ausnutzen.

Bevorzugt ist auch eine Ausführungsform, bei der die Fokuslagen des ersten und zweiten Laserstrahls in der Werkstückoberflächenebene oder unterhalb der Werkstückoberfläche innerhalb der Dampfkapillare liegen. Dadurch wird die Nahtqualität optimiert. In der Regel liegen gemeinsame Foki bzw. liegt der tiefergelegene Fokus maximal in einer Tiefe entsprechend der halben Tiefenerstreckung der Dampfkapillare bzw. der Werkstückdicke (bezüglich der z-Richtung).

Besonders bevorzugt ist eine Variante, bei der der zweite Laserstrahl eine bessere Strahlqualität (auch genannt Strahlgüte) aufweist als der erste Laserstrahl, insbesondere mit SPP1 ≥ 2*SPP2, bevorzugt SPP1 ≥ 4*SPP2, mit SPP1: Strahlparameterprodukt des ersten Laserstrahls, und SPP2: Strahlparameterprodukt des zweiten Laserstrahls. Dadurch konnten sowohl große Einschweißtiefen als auch hohe Vorschubgeschwindigkeiten bei guter Nahtqualität erreicht werden. Im Rahmen der Erfindung kann der Vorteil eines niedrigen SPP, also hoher Strahlqualität, nämlich eine große Einschweißtiefe, mit den Vorteilen eines hohen SPP, also niedriger Strahlqualität, nämlich eine bessere Nahtqualität bzw. eine höher wählbare Vorschubgeschwindigkeit, miteinander verbunden werden.

Vorteilhaft ist auch eine Variante, bei der für eine erste Laserleistung L1 des ersten Laserstrahls und eine zweite Laserleistung L2 des zweiten Laserstrahls gilt: L2 ≥ L1, bevorzugt L2 ≥ 2*L1. Dies hat sich in der Praxis bewährt, um einen großen Energieeintrag in größerer Tiefe der Dampfkapillare zu erhalten. Insbesondere wurden auch gute Schweißergebnisse mit gleichen Laserleistungen L2=L1 erzielt. Die Intensität des zweiten Laserstrahls allein würde ebenfalls ausreichen, um eine Dampfkapillare im Werkstück zu erzeugen. Meist gilt weiterhin auch L2 ≥ 5*L1. Alternativ kann aber auch L2 < L1 gewählt werden. Am Allgemeinen gilt, dass die Intensität des zweiten Laserstrahls im Fokus mindestens genauso hoch wie die Intensität des ersten Laserstrahls im Fokus ist.

Bei einer bevorzugten Variante ist vorgesehen, dass für eine kleinste Breite KD der Dampfkapillare im oberen, werkstückoberflächennahen Viertel der Dampfkapillare und für eine größte Breite G2 des zweiten Laserstrahls in dem oberen Viertel der Dampfkapillare gilt: 0,8*KD ≥ G2, bevorzugt 0,6*KD ≥ G2. Dadurch kann ein Energieeintrag in das Schmelzbad im oberflächennahen Viertel der Dampfkapillare reduziert werden, und eine besonders gute Nahtqualität bzw. eine besonders hohe Vorschubgeschwindigkeit erreicht werden. Bevorzugt gilt bezüglich einer kleinsten Breite K1 des ersten Laserstrahls im dem oberen Viertel der Dampfkapillare auch 0,8*K1 ≥ G2 oder 0,6*K1 ≥ G2.

Bevorzugt ist auch eine Verfahrensvariante, bei der der erste Laserstrahl und der zweite Laserstrahl koaxial mit einer gemeinsamen Strahlachse ausgerichtet sind. Durch die koaxiale Ausrichtung kann der zweite Laserstrahl in besonders große Tiefen des Werkstücks vordringen, ohne zunächst auf die Schmelze zu treffen. Zudem kann die Schweißvorrichtung einen einfachen Aufbau besitzen.

Bevorzugt ist eine Weiterentwicklung hierzu, bei der die gemeinsame Strahlachse im Wesentlichen senkrecht zur Werkstückoberfläche verläuft. Dadurch wird die Einschweißtiefe optimiert. Insbesondere kann die Strahlachse mit einer Abweichung von der Senkrechten der Werkstückoberfläche mit 5° oder weniger, und bevorzugt mit 0°, gewählt werden. Je nach Stoß- und Schweißnahtart sind aber auch andere Einfallwinkel, insbesondere mit einer Abweichung von mehr als 5° von der Senkrechten der Werkstückoberfläche, anwendbar.

Bevorzugt werden der erste und der zweite Laserstrahl gemeinsam in einem Lichtleiter geführt, da hierdurch ein besonders einfacher Aufbau für den Lichttransport und die Abbildung auf das Werkstück erreicht werden kann. Dabei kann eine gemeinsame Faser, z.B. durch Verwendung unterschiedlicher Einkoppelwinkel der Laserstrahlen, unterschiedlicher Einkoppelorte auf der Eintrittsfläche der Faser (z.B. zentrisch und exzentrisch), und/oder unterschiedlicher Wellenlängen der Laserstrahlen genutzt werden, oder es können Mehrfach-Fasern, bzw. Mehrfach-Kern-Fasern (d.h. mehrere nebeneinander liegende oder koaxial ineinander liegende Faserkerne) zum Einsatz kommen.

Bevorzugt ist weiterhin eine Variante, die vorsieht, dass der erste und der zweite Laserstrahl in einer 2-in-1-Faser mit einer Kernfaser und einer Ringfaser geführt werden, insbesondere wobei der erste Laserstrahl in der Ringfaser und der zweite Laserstrahl in der Kernfaser geführt wird,
dass der erste und zweite Laserstrahl vor dem Werkstück aus einem Faserende der 2-in-1-Faser austreten,
und dass das Faserende mit Ringfaser und Kernfaser mittels einer gemeinsamen Optik in einem gemeinsamen Fokus auf oder in das Werkstück abgebildet wird, wodurch der erste und zweite Laserstrahl von der gemeinsamen Optik auf das Werkstück gerichtet werden,
insbesondere wobei die gemeinsame Optik eine Kollimationslinse und eine Fokussierlinse umfasst, bevorzugt ausschließlich umfasst. Mit dieser Variante kann ein besonders einfacher Aufbau für den Laserlichttransport und die Abbildung auf das Werkstück genutzt werden.

Bei einer vorteilhaften Weiterentwicklung dieser Variante ist vorgesehen, dass eine gemeinsame Laserquelle einen Ur-Laserstrahl erzeugt, wobei ein erster Teil des Ur-Laserstrahls exzentrisch in die Ringfaser eingekoppelt wird und den ersten Laserstrahl bildet, und ein zweiter Teil des Ur-Laserstrahls in die Kernfaser eingekoppelt wird und den zweiten Laserstrahl bildet. Dadurch ist es möglich, mit einer einzigen Laserquelle (Strahlquelle) einen Teilstrahl hoher Strahlgüte und einen Teilstrahl geringer Strahlgüte auf einfache Weise automatisch durch das (gemeinsame) Einkoppeln in die 2-in-1-Faser bereitzustellen. Abhängig davon, in welche der Fasern der Ur-Laserstrahl-Teil eingekoppelt wird, tritt dieser mit unterschiedlichen Laserstrahlcharakteristiken an dem anderen Faserende aus. Zur Steuerung der Strahlanteile auf Kern- und Ringfaser kann eine in den Strahlengang des Ur-Laserstrahls bewegbare Keilplatte vorgesehen sein. Als besonders vorteilhaft zur Erzeugung unterschiedlicher Lasercharakteristiken haben sich 2-in-1-Fasern erwiesen, die eine Kernfaser mit möglichst kleinem Kernfaserdurchmesser ≤150µm und eine Ringfaser mit einem Außendurchmesser größer als der dreifache Kernfaserdurchmesser aufweisen.

Bei einer alternativen Variante ist vorgesehen, eine erste Laserquelle den ersten Laserstrahl erzeugt und eine zweite Laserquelle den zweiten Laserstrahl erzeugt, und dass der erste Laserstrahl und der zweite Laserstrahl mittels eines Strahlteiler-Elements überlagert werden. Bei dieser so genannten Twin-Spot-Technik können die Laserquellen für den ersten und zweiten Laserstrahl frei gewählt werden. Der Aufbau einer entsprechende Laserschweißvorrichtung ist insgesamt einfach und kostengünstig.

Bei einer Weiterentwicklung dieser Variante werden die überlagerten Laserstrahlen mit einer gemeinsamen Fokussieroptik, insbesondere einer Fokussierlinse, auf das Werkstück gerichtet. Dies ist besonders einfach und in der Praxis bewährt.

Eine andere, alternative Ausführungsform sieht vor, dass der erste und der zweite Laserstrahl in einer Dual-Core-Faser mit zwei nebeneinander liegenden, zueinander parallelen Laserfasern geführt werden,
dass der erste und zweite Laserstrahl vor dem Werkstück aus den Faserenden der Dual-Core-Faser austreten,
und dass die Faserenden der Laserfasern über eine gemeinsame Optik in einem gemeinsamen Fokus auf oder in dem Werkstück abgebildet werden, wodurch der erste und zweite Laserstrahl von der gemeinsamen Optik auf das Werkstück gerichtet werden,
insbesondere wobei die gemeinsame Optik eine Kollimationslinse und eine Fokussierlinse umfasst, bevorzugt ausschließlich umfasst. Dadurch ist ein vergleichsweise einfacher Aufbau einer Laserschweißvorrichtung für den Lichttransport und die Abbildung der Laserstrahlen auf das Werkstück möglich.

Das erfindungsgemäße, oben beschriebenen Verfahren kann an einer geeignet ausgebildeten Laserschweißvorrichtung durchgeführt werden. Mit einer solchen Laserschweißvorrichtung können Werkstücke, insbesondere Stahlwerkstücke, bei großer Einschweißtiefe und bei hoher Vorschubgeschwindigkeit und guter Nahtqualität geschweißt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: einen schematischen Längsschnitt durch einen Teil einer Laserschweißvorrichtung und ein Werkstück be einer Variante des erfindungsgemäßen Tiefschweißverfahrens;
- Fig. 2: experimentelle Querschliffe durch eine Schweißnaht (jeweils oben) und Aufsichten auf eine Schweißnaht (jeweils unten) beim Tiefschweißen mit einem Laserstrahl hoher Strahlqualität a), mit zwei Laserstrahlen gemäß der Erfindung b) und mit einem Laserstrahl geringer Strahlqualität c), bei geringer Schweißgeschwindigkeit;
- Fig. 3: experimentelle Seitenansichten auf das Schmelzbad beim Schweißen (jeweils oben), Aufsichten auf die Schweißnaht (jeweils Mitte) und Querschnitte durch die Schweißnaht (jeweils unten) bei einer erfindungsgemäßen Variante mit zwei Laserstrahlen a) und mit einem Laserstrahl b), bei hoher Schweißgeschwindigkeit;
- Fig. 4: experimentelle Schrägansichten auf das Schmelzbad beim Schweißen bei Verwendung eines Laserstrahls a) und bei einer erfindungsgemäßen Variante mit zwei Laserstrahlen b);
- Fig. 5: eine schematische Ansicht eines ersten Beispiels einer Laserschweißvorrichtung in Twin-Spot-Technik mit Strahlteiler-Element;
- Fig. 6: eine schematische Längsschnittsansicht durch eine 2-in-1-Faser (oben), zur Verwendung mit der Erfindung, sowie einen zugehörigen Strahlerzeugungsaufbau (unten);
- Fig. 7: eine schematische Ansicht einer Dual-Core-Faser-Anordnung zur Verwendung mit der Erfindung;
- Fig. 8: eine schematische Darstellung der Strahlkaustiken von erstem und zweitem Laserstrahl in einer Variante des erfindungsgemäßen Laserschweißverfahrens, mit näherungsweise gleichen Öffnungswinkeln;
- Fig. 9: eine schematische Darstellung der Strahlkaustiken von erstem und zweitem Laserstrahl in einer Variante des erfindungsgemäßen Laserschweißverfahrens, mit ungleichen Öffnungswinkeln.

### Einführung

Beim Laserstrahltiefschweißen wird durch die Relativbewegung zwischen Laserstrahl und Werkstück eine Dampfkapillare (Keyhole) durch ein flüssiges Schmelzbad bewegt. Bei zu hoher Vorschubgeschwindigkeit löst sich hierbei eine Vielzahl an Schmelzspritzern ab und es reduziert sich die Qualität der Schweißnaht durch Bildung von Kerben.

Beim herkömmlichen Laserstrahltiefschweißen wird der größte Teil der Laserenergie im oberen Bereich der Dampfkapillare absorbiert. In dieser Region trifft der Laserstrahl erstmalig auf das Werkstück. Zumeist ist hier auch die Brennebene positioniert. Entsprechend befindet sich hier der Ort der größten Leistungsdichte.

Mit steigender absorbierter Energie nimmt die Schmelzflussdynamik zu, und bei Erreichen kritischer Werte treten die oben genannten negativen Effekte auf, welche einen Masseverlust in der Naht und/oder ausgeprägt zyklisches Schmelzflussverhalten bewirken.

Wird ein Laserstrahl mit sehr guter Strahlqualität (auch Strahlgüte genannt) verwendet, so erhöht sich (bei gleichem Energieeintrag), im Vergleich zu einem Laser geringer Strahlqualität, die resultierende Einschweißtiefe. Die Grenze guter Schweißnahtqualität verschiebt sich jedoch zu niedrigeren Vorschubgeschwindigkeiten. Die Erfinder gehen davon aus, dass hierfür eine besonders hohe oberflächennahe absorbierte Leistungsdichte ursächlich ist. Zudem entsteht bei der Verwendung eines Laserstrahls mit hoher Strahlqualität eine schmalere Dampfkapillare, welche bei hohen Geschwindigkeiten schneller zu kollabieren droht, als eine breitere Dampfkapillare durch einen Laserstrahl geringerer Strahlqualität.

Mit der vorliegenden Erfindung wird in Teilen die Energieeinkopplung gezielt in tiefere Regionen der Dampfkapillare verlagert, so dass hohe Einschweißtiefen bei guter Nahtqualität für einen möglichst großen Geschwindigkeitsbereich erzielt werden.

### Erfindungsgemäße Verfahrensführung

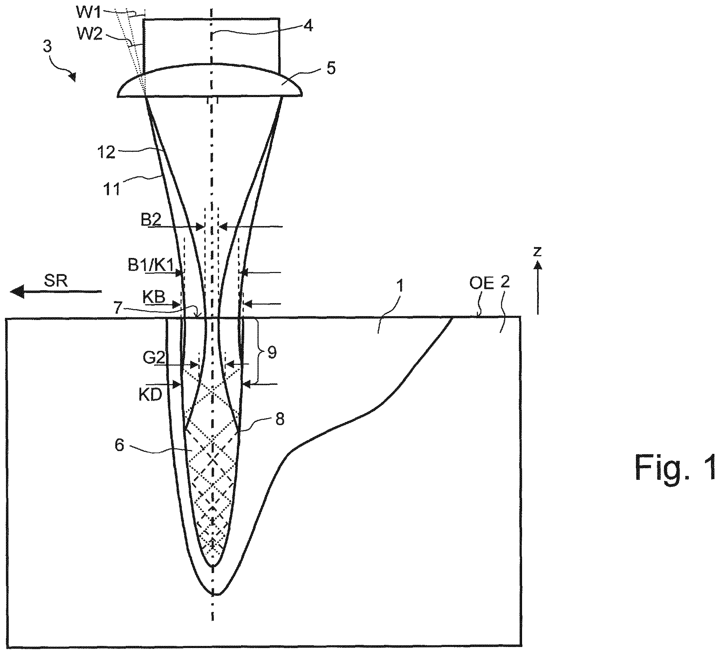

Die **Fig. 1** zeigt in einem schematischen Längsschnitt den Bereich des Schmelzbades 1 in einem Werkstück 2, welches gerade mit einer Variante des erfindungsgemäßen Tiefschweißverfahrens mit einer Laserschweißvorrichtung 3 (in Fig. 1 nur teilweise dargestellt) geschweißt wird. Die (relative) Schweißrichtung SR ist hier nach links gerichtet, etwa indem das Werkstück 2 (bei im Übrigen ortsfester Laserschweißvorrichtung 3) nach rechts verfahren wird.

Ein erster Laserstrahl 11 und ein zweiter Laserstrahl 12 werden hier koaxial entlang einer gemeinsamen Strahlachse 4 geführt und mittels einer Fokussieroptik 5 der Laserschweißvorrichtung 3 auf das Werkstück 2 fokussiert, etwa um zwei Werkstückteile, deren Kontaktfläche sich in der Zeichenebene von Fig. 1 befindet, zu dem Werkstück 2 zu verschweißen. Die Strahlachse 4 verläuft hier senkrecht zur Werkstückoberflächenebene OE. Beide Laserstrahlen 11, 12 verfügen hier über ein (bezogen auf die Strahlachse 4) im Wesentlichen rotationssymmetrisches ("kreisförmiges") Intensitätsprofil. Als Begrenzungen der Laserstrahlen 11, 12 können die Orte, wo die Intensität auf die Hälfte der Maximalintensität abgefallen ist, herangezogen werden.

In der gezeigten Variante haben die beiden Laserstrahlen 11, 12 ihren Fokus in der Werkstückoberflächenebne OE, so dass die Laserstrahlen 11, 12 hier jeweils ihren geringsten Durchmesser ("Waist") aufweisen. Der Durchmesser (FWHM) des ersten Laserstrahls 11 in der Werkstückoberflächenebene OE, genannt erste Strahlbreite B1, ist deutlich größer als der Durchmesser (FWHM) des zweiten Laserstrahls 12 in der Werkstückoberflächenebene OE, genannt zweite Strahlbreite B2, hier mit ca. B2=0,25*B1. Insgesamt ist die Kaustik des zweiten Laserstrahls 12 kleiner als die Kaustik des ersten Laserstrahls 11.

Der erste Laserstrahl 11 allein besitzt eine ausreichende Intensität, um im Werkstück 2 eine Dampfkapillare 6 zu erzeugen. Entsprechend ist die Kapillarbreite KB der Dampfkapillare 6 in der Werkstückoberflächenebene OE in etwa so groß wie die erste Strahlbreite B1; in der gezeigten Variante ist dabei KB geringfügig größer als B1, hier ca. mit KB=1,15*B1. Um die Dampfkapillare 6 herum ist Schmelze (aufgeschmolzenes Werkstückmaterial) angeordnet, wobei sich (bezogen auf die Schweißrichtung SR) hinter der Dampfkapillare 6 der größte Teil des Schmelzbades 1 befindet.

Da die zweite Strahlbreite B2 des zweiten Laserstrahls 12 deutlich kleiner ist als die erste Strahlbreite B1 des ersten Laserstrahls 11, kann der zweite Laserstrahl 12 die Öffnung 7 der Dampfkapillare 6 passieren, ohne auf Schmelze des Schmelzbades 1 zu treffen. In der gezeigten Variante tritt die erste teilweise Absorption 8 des zweiten Laserstrahls 12 an der Grenzfläche der Dampfkapillare 6 erst in einem mittleren Drittel (bezogen auf die Richtung z in das Werkstück 2 hinein) der Dampfkapillare 6 auf, und der nicht absorbierte Teil der Strahlung wird reflektiert, vgl. den gestrichelt eingezeichneten, reflektierten zweiten Laserstrahl 12. Entsprechend wird in Oberflächennähe durch den zweiten Laserstrahl 12 kaum Energie in das Schmelzbad 1 eingebracht. Man beachte, dass der erste Laserstrahl 11 bereits deutlich weiter oben erstmalig teilweise absorbiert und teilweise reflektiert wird, vgl. den gepunktet eingezeichneten, reflektierten ersten Laserstrahl 11.

Im oberen Viertel 9 der Dampfkapillare 6 kann die größte Breite (Durchmesser) G2 des zweiten Laserstrahls 12 (hier am unteren Rand des oberen Viertels 9) und die kleinste Breite (Durchmesser) KD der Dampfkapillare 6 (hier ebenfalls am unteren Rand des oberen Viertels 9) bestimmt werden. Ebenso kann die kleinste Breite (Durchmesser) K1 des ersten Laserstrahls 11 (hier am oberen Rand des Viertels 9, also in der Werkstückoberflächenebene) bestimmt werden. In der gezeigten Variante gilt ca. G2=0,46*KD und weiterhin ca. G2=0,5*K1. Dadurch, dass G2 deutlich kleiner ist als KD bzw. K1 kann die Einstrahlung der Energie des zweiten Laserstrahls 12 vor allem im unteren Bereich der Dampfkapillare 6, und gerade nicht im oberen Viertel 9, in das Schmelzbad 1 weiter befördert werden.

Aufgrund der Energieeinstrahlung des zweiten Laserstrahls 12 im tiefer gelegenen Bereich der Dampfkapillare 6 kann die Schmelzbaddynamik verringert werden, insbesondere in Oberflächennähe. Turbulenzen werden vermindert bzw. reduziert. Dadurch wird die Ablösung von Schweißspritzern verringert, und die Welligkeit der entstehenden Schweißnaht reduziert.

In der gezeigten Ausführungsform ist das Strahlparameterprodukt SPP1 des ersten Laserstrahls ca. 2,7 mal so groß wie das Strahlparameterprodukt SPP2 des zweiten Laserstrahls 12, d.h. der zweite Laserstrahl 12 hat die bessere Strahlgüte. Typischerweise wird als erster Laserstrahl (mit geringer Strahlgüte) ein Multimode-Laserstrahl gewählt. Die Strahlparameterprodukte SPP1, SPP2 können als Produkt der jeweiligen Fokuswinkel (Öffnungswinkel im Fernfeld) W1, W2 mit den Radien der jeweiligen Laserstrahlen 11, 12 an der schmalsten Stelle der Kaustik (hier also den halbierten Strahlbreiten B1, B2) ermittelt werden. In der gezeigten Variante ist W1 < W2, hier mit ca. W1=0,68*W2. Man beachte, dass im Rahmen der Erfindung W2 ≥ W1 gewählt wird.

Um bei hoher Vorschubgeschwindigkeit (Schweißgeschwindigkeit) eine qualitativ hochwertige Schweißnaht zu erzeugen, initiiert der erste Laserstrahl 11 die Bildung der Dampfkapillare (Keyhole) 6 mit ausreichend großem Durchmesser, insbesondere der oberen Öffnung 7. Gleichzeitig wird (hier koaxial) in die gebildete Dampfkapillare 6 der zweite Laserstrahl 12 gerichtet bzw. fokussiert, wobei die Kaustik des zweiten Laserstrahls 12 kleiner ist als die des ersten Laserstrahls 11. Die Energie des zweiten Laserstrahls 12 wird erst in einer unteren Zone der Dampfkapillare 6 absorbiert/eingekoppelt. Die absorbierte Energie im oberen Bereich der Dampfkapillare ist gegenüber dem Stand der Technik abgesenkt und im unteren Bereich gesteigert; in Folge wird die Einschweißtiefe gesteigert, wobei trotzdem hohe Vorschubgeschwindigkeiten möglich sind.

### Experimentelle Ergebnisse

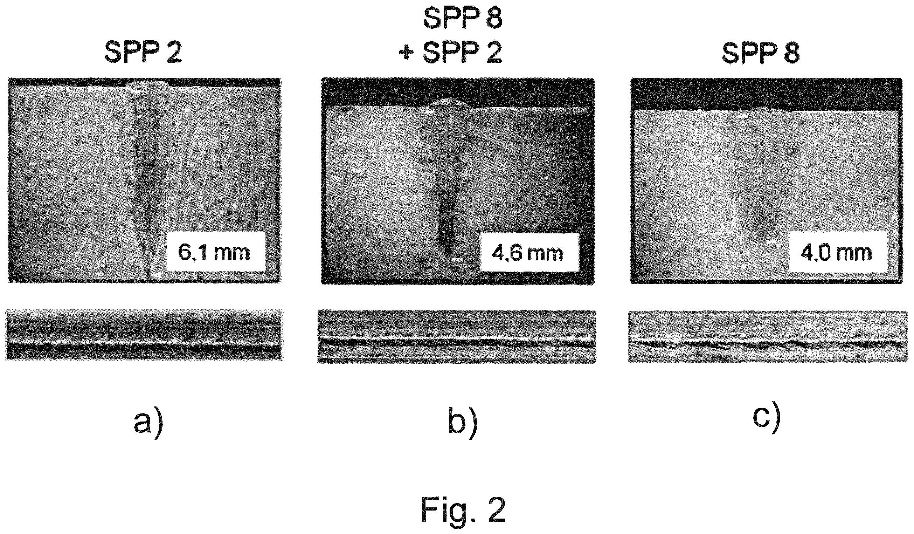

Für die Aufnahmen der **Fig. 2** wurden Werkstücke aus Baustahl einer Blindschweißung unterzogen, mit a) einem Laserstrahl mit SPP=2 mm*mrad, Fokusdurchmesser 150 µm, Laserquelle TruDisk 5000.5, weiter mit b) erfindungsgemäß zwei koaxialen Laserstrahlen, mit SPP=2 mm*mrad und SPP=8 mm*mrad, Fokusdurchmesser 150 µm und 300 µm, Laserquelle TruDisk 5000.5 und TruDisk 16002, und weiter mit c) einem Laserstrahl mit SPP=8 mm*mrad, Fokusdurchmesser 300 µm, Laserquelle TruDisk 16002. In allen Fällen betrug die Vorschubgeschwindigkeit 1 m/min und die Gesamtlaserleistung P=2 kW, im Fall b) mit 1 kW je Laserstrahl. Die Fokuslage war jeweils bei -4 mm im Werkstück.

Wie aus den jeweils oberen Querschnitts-Abbildungen der Fig. 2 ersichtlich ist, konnte mit einem Laserstrahl mit SPP 2 mm*mrad eine Einschweißtiefe von 6,1 mm erreicht werden, und mit einem Laserstrahl mit SPP 8 mm*mrad lediglich eine Einschweißtiefe von 4,0 mm bei gleicher Laserleistung. Durch Kombination von zwei Lasern mit SPP 2 mm*mrad und SPP 8 mm*mrad, bei insgesamt gleicher Leistung, konnte eine Einschweißtiefe von 4,6 mm erreicht werden, also deutlich mehr als mit dem einen Laserstrahl mit SPP 8 mm*mrad.

Bei der vergleichsweise geringen Vorschubgeschwindigkeit von 1 m/min wurde bei allen Werkstücken eine akzeptable Nahtqualität erreicht, vgl. die jeweils unteren Aufsichtbilder.

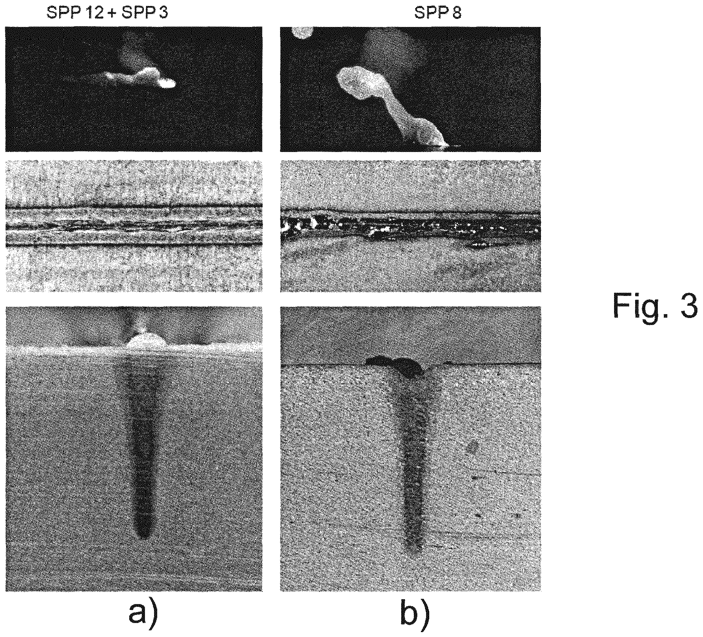

Wird eine höhere Vorschubgeschwindigkeit gewählt, wird die Nahtqualität stärker beeinflusst. Für **Fig. 3** wurden wiederum Werkstücke aus Baustahl geschweißt, zum einen mit a) erfindungsgemäß zwei koaxialen Laserstrahlen, mit SPP=12 mm*mrad und SPP=3 mm*mrad, und zum anderen mit b) einem Laserstrahl, mit SPP=8 mm*mrad. Die Gesamtlaserleistung betrug jeweils 5 kW (bei zwei Laserstrahlen beide jeweils 2,5 kW), die Fokuslage -2 mm, die Vorschubgeschwindigkeit 8 m/min.

Aus den Seitenansichten aufgenommen während des Schweißprozesses jeweils oben ist ersichtlich, dass mit den zwei Laserstrahlen a) ein ruhiges Schmelzbad erhalten wird, während es mit dem einen Laserstrahl b) zu erheblichem Auswurf von Schmelzetröpfchen (Schweißspritzern) kommt. Die Nahtqualität ist, wie anhand der Aufsichten in der Mitte der Fig. 3 ersichtlich, bei Verwendung der zwei Laserstrahlen a) sehr gut, während bei Verwendung nur eines Laserstrahls b) eine ungleichmäßige Schweißnaht mit zahlreichen Wulsten erhalten wird. In den Querschnittsaufnahmen unten in Fig. 3 ist auch ersichtlich, dass bei b) die Schweißnaht infolge Materialverlusts eine merkliche Vertiefung ausbildet und ungleichmäßige Oberflächenwulste aufweist, während bei a) keine Vertiefung und eine symmetrische, mittige Schweißwulst erkennbar ist.

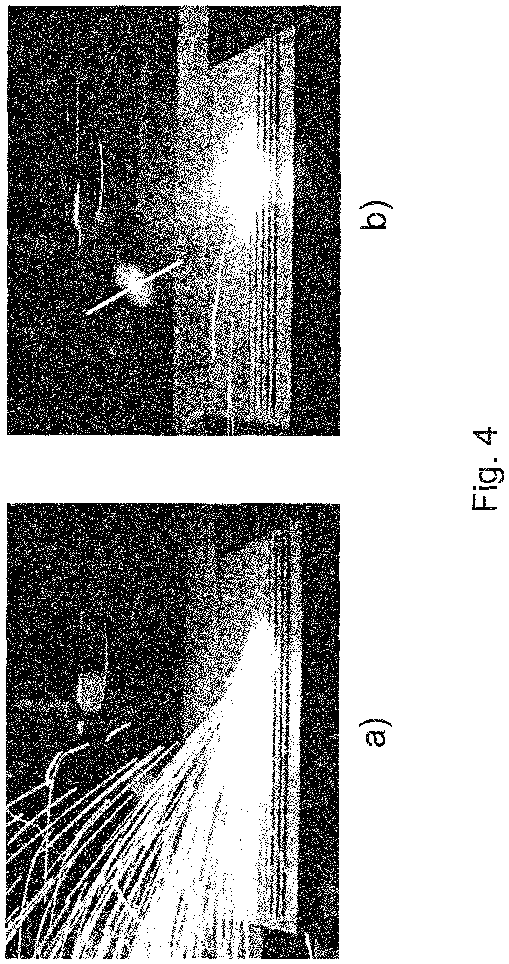

In **Fig. 4** sind jeweils größere Bildausschnitte beim Schweißen von Werkstücken aus Baustahl in Schrägansicht gezeigt, bei a) mit einem Laserstrahl, Fokusdurchmesser 440 µm, und bei b) mit erfindungsgemäß zwei Laserstrahlen, Fokusdurchmesser 110 µm und 440µm. Die Vorschubgeschwindigkeit betrug jeweils 10 m/min, die Gesamtlaserleistung jeweils 5 kW (bei zwei Laserstrahlen beide jeweils 2,5 kW), und die Fokuslage jeweils -2mm.

Bei Verwendung nur des einen Laserstrahls a) kommt es zu einem erheblichen, schweifartigen Auswurf von Schweißspritzern nach hinten, während bei Verwendung der zwei Laserstrahlen b) nur ein minimaler Auswurf von Schweißspritzern beobachtet wird.

### Laserschweißvorrichtungen

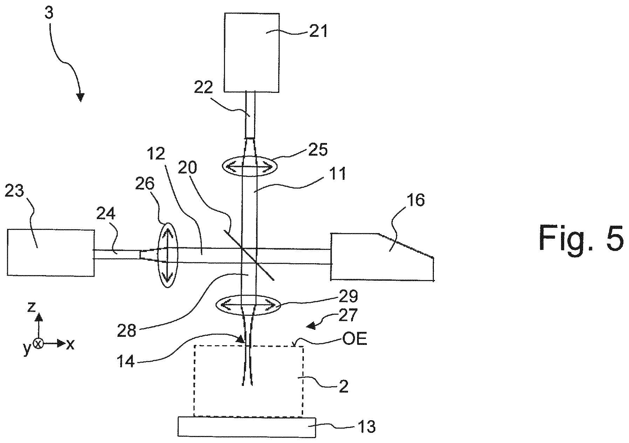

In der **Fig. 5** ist ein Beispiel einer Laserschweißvorrichtung 3 in einer Schemazeichnung dargestellt. Die dargestellte Laserschweißvorrichtung 3 arbeitet mit der so genannten Twin-Spot-Technik mit einem Strahlteiler-Element 20.

Die Laserschweißvorrichtung 3 umfasst eine erste Laserquelle 21, die einen ersten Laserstrahl 11 mit typischerweise geringer Strahlqualität erzeugt. Falls nötig, kann der erste Laserstrahl 11 teilweise über eine Lichtleitfaser 22 transportiert werden. Weiterhin ist eine zweite Laserquelle 23 vorgesehen, die einen zweiten Laserstrahl 12 mit typischerweise hoher Strahlqualität erzeugt. Falls nötig, kann auch der zweite Laserstrahl 12 teilweise über eine Lichtleitfaser 24 transportiert werden. Der erste Laserstrahl 11 wird über eine erste Kollimatoroptik 25 kollimiert (parallelisiert) und auf das Strahlteiler-Element 20 (üblicherweise ein halbdurchlässiger Spiegel) gerichtet. Der zweite Laserstrahl 12 wird über eine zweite Kollimatoroptik 26 kollimiert (parallelisiert) und ebenfalls auf das Strahlteiler-Element 20 gerichtet. Der zweite Laserstrahl 12 ist gegenüber dem ersten Laserstrahl 11 um 90° gedreht, und das Strahlteiler-Element 20 ist in einem 45°-Winkel zu den Laserstrahlen 11, 12 angeordnet.

In Verlängerung der Strahlachse des zweiten Laserstrahls 12 ist hier eine so genannte Strahlfalle 16 angeordnet.

In der Verlängerung der Strahlachse des ersten Laserstrahls 11 ist hier der Schweißplatz 27 eingerichtet. Der Gesamtstrahl 28 aus Anteilen von erstem Laserstrahl 11 und zweitem Laserstrahl 12 hinter dem Strahlteiler-Element 20 wird mit einer gemeinsamen Fokussieroptik 29 für den ersten und zweiten Laserstrahl 11, 12 fokussiert und auf ein zu schweißendes Werkstück 2 gerichtet. Der (gemeinsame) Fokus 14 liegt hier in der Werkstückoberflächenebene OE.

Das Werkstück 2 ist hier auf einem Verfahrtisch 13 angeordnet, mit dem das Werkstück 2 entlang der Strahlachse 4 (z-Richtung) des Gesamtstrahls 28 verfahren werden kann, insbesondere um die Fokuslage einzustellen, und auch in die dazu senkrechten Richtungen (x-Richtung und y-Richtung), um eine gewünschte Schweißnaht abzufahren.

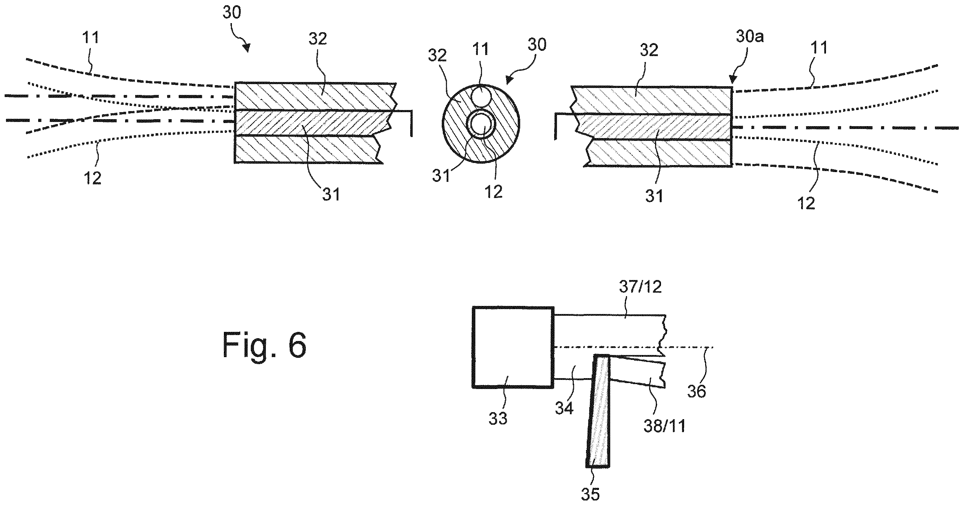

Die **Fig. 6** zeigt oben in einem schematischen Längsschnitt eine 2-in-1-Faser 30, die als Teil einer Laserschweißvorrichtung eingesetzt werden kann.

Die 2-in-1-Faser 30 umfasst eine zentrale Kernfaser 31 und eine diese umgebende Ringfaser 32, in denen jeweils Laserlicht geführt werden kann. Ein erster Laserstrahl 11 wird hier in die Ringfaser 32 eingekoppelt, und ein zweiter Laserstrahl 12 wird hier in die Kernfaser 31 eingekoppelt (oben links dargestellt). Bei der Einkopplung haben der erste und der zweite Laserstrahl 11, 12, jeweils einen kreisförmigen Querschnitt (siehe die Querschnittsdarstellung der 2-in-1-Faser 30 in der Mitte oben).

Der einzukoppelnde erste Laserstrahl 11 und der einzukoppelnde zweite Laserstrahl 12 können aus einer gemeinsamen Laserquelle 33 stammen, die einen Ur-Laserstrahl 34 erzeugt, aus dem mit beispielsweise einer Keilplatte 35 ein erster Strahlungsanteil 38 und ein zweiter Strahlungsanteil 37 erzeugt werden (in Fig. 6 unten dargestellt). Je weiter die Keilplatte 35 in den Strahlengang des Ur-Laserstrahls 34 bewegt wird, desto größer wird der Strahlungsanteil 38, der durch diese abgelenkt wird, d.h. die Anteile der Verteilung auf die beiden Laserstrahlen 11, 12 sind steuerbar.

Abhängig davon, in welche der Fasern 31, 32 der jeweilige erzeugte Laserstrahl 11, 12 eingekoppelt wird, tritt dieser mit unterschiedlichen Laserstrahlcharakteristiken an dem Faserende 30a aus. Zur Einkopplung in die Faser 30 wird üblicherweise zwischen der Keilplatte 35 und der Faser 30 eine Fokussieroptik vorgesehen (nicht näher dargestellt). Der erste Strahlungsanteil 38 des Ur-Laserstrahls 34 (für den ersten Laserstrahl 11) wird exzentrisch in die äußeren Ringfaser 32 eingekoppelt, und der zweite Strahlungsanteil 37 des Ur-Laserstrahls 34 (für den zweiten Laserstrahl 12) wird zentrisch in die innere Kernfaser 31 eingekoppelt.

Der am Faserende 30a (vgl. Fig. 6 oben rechts) ausgekoppelte zweite Laserstrahl 12 aus der Kernfaser 31 weist ein der inneren Kernfaser 31 entsprechendes schmales ausgefülltes Kreisprofil, sowie eine vergleichsweise hohe Strahlqualität mit einem scharfen Fokus auf. Der ausgekoppelte erste Laserstrahl 11 aus der Ringfaser 32 weist ein dem äußeren Ringkern entsprechendes Ringprofil mit homogener Leistungsverteilung, sowie eine vergleichsweise geringere Strahlqualität auf, welche durch die exzentrische Einkopplung verursacht wird.

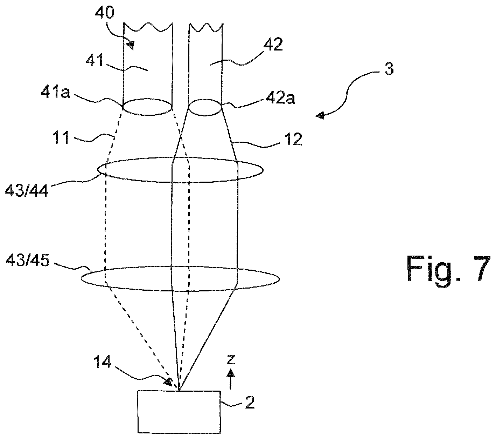

Zusammenfassend hat die Kernfaser 31 einen engeren Durchmesser als die Ringfaser 32, wodurch der zweite Laserstrahl 12 intrinsisch eine bessere Strahlgüte als der erste Laserstrahl 11 bekommt. Bei der Auskopplung aus dem Faserende 30a hat sich der erste Laserstrahl 11 über die gesamte Ringfaser 32 verteilt, also um die Kernfaser 31 bzw. den austretenden ersten Laserstrahl 11 herum. Die ausgetretenen Laserstrahlen 11, 12 können mit einer gemeinsamen Optik auf das Werkstück fokussiert werden (nicht näher dargestellt, vgl. hierzu aber Fig. 7).

In **Fig. 7** ist schematisch ein Teil einer Laserschweißvorrichtung 3 mit einer Dual-Core-Faser 40 abgebildet. Die Dual-Core-Faser umfasst zwei parallel zueinander verlaufende Lichtleitfasern (Laserfasern) 41, 42, die typischerweise durch eine gemeinsame Ummantelung (nicht dargestellt) in einem festen Abstand zueinander angeordnet sind. An den Faserenden 41a, 42a treten der erste Laserstrahl 11 (gestrichelt dargestellt) und der zweite Laserstrahl 12 (durchgezogen dargestellt) aus, die über eine gemeinsame Optik 43, umfassend hier eine Kollimationslinse 44 und eine Fokussierlinse 45, auf ein Werkstück 2 gerichtet und fokussiert werden. Die Laserstrahlen 11, 12 werden hier am gleichen Ort, insbesondere in der gleichen Tiefe (z-Position) im Werkstück 2, fokussiert, vgl. Fokus 14, verlaufen aber nicht koaxial. Die beiden Lichtleitfasern 41, 42 sind hier aus einer Lichtleitfaser 41 mit großem Durchmesser (z.B. 440µm) für den ersten Laserstrahl 11 mit geringer Strahlqualität und einer Lichtleitfaser 42 mit geringem Durchmesser (z.B. 110µm) für den zweiten Laserstrahl 12 mit hoher Strahlqualität gebildet. Die Laserstrahlen 11, 12 können entweder aus unterschiedlichen Laserquellen mit unterschiedlichen Strahlqualitäten bereitgestellt werden, oder aus einer einzigen, gemeinsamen Laserquelle stammen, wobei die Strahlqualität des ersten Laserstrahls 11 dann z.B. durch exzentrische Einkopplung in die Lichtleitfaser 41 mit großem Durchmesser oder andere bekannte Verfahren verschlechtert wird.

Man beachte, dass mit einer gemeinsamen Optik 43 wie in Fig. 7 dargestellt auch die Laserstrahlen 11, 12, die aus dem Faserende 30a einer 2-in-1-Faser 30 austreten (siehe Fig. 6), auf oder in ein Werkstück 2 fokussiert werden können (nicht näher dargestellt).

### Strahlkaustiken

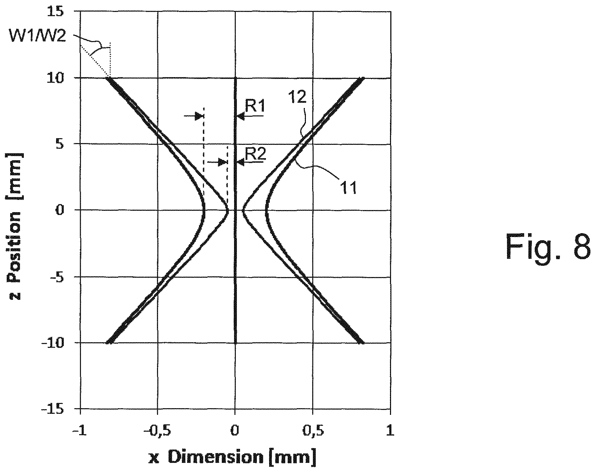

In **Fig. 8** sind typische Kaustiken von Laserstrahlen 11, 12 dargestellt, wie sie in der Erfindung eingesetzt werden können. Der erste Laserstrahl 11 und der zweite Laserstrahl 12 weisen hier annähernd gleiche Fokussierwinkel (Öffnungswinkel) W1, W2 auf. Jedoch ist der Radius R1 des ersten Laserstrahls 11 an der engsten Stelle (hier bei z=0, in der Werkstückoberflächenebene) ca. 3-mal so groß wie der Radius R2 des zweiten Laserstrahls 12 an der engsten Stelle. Entsprechend hat der erste Laserstrahl 11 ein ca. 3-mal größeres Strahlparameterprodukt SPP1 als der zweite Laserstrahl 12 mit Strahlparameterprodukt SPP2.

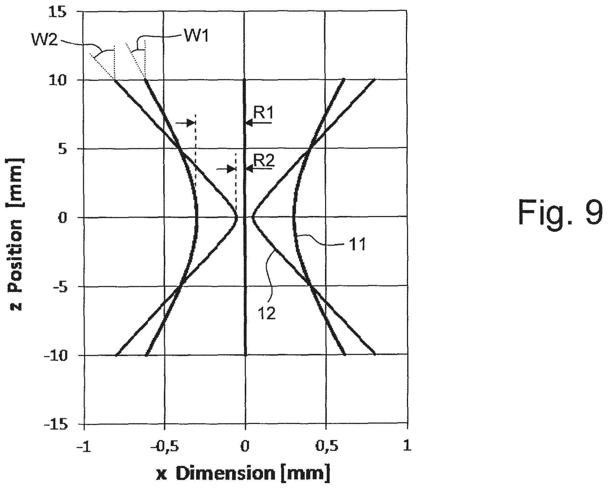

**Fig. 9** zeigt weitere Kaustiken von Laserstrahlen 11, 12, wie sie in der Erfindung eingesetzt werden können. Der erste Laserstrahl 11 weist hier einen kleineren Fokussierwinkel W1 auf als der zweite Laserstrahl 12 mit Fokussierwinkel (Öffnungswinkel) W2, mit ca. W2=1,3*W1. Der Radius R1 des ersten Laserstrahls 11 an der engsten Stelle (hier bei z=0, in der Werkstückoberflächenebene) ist hier ca. 5,8 -mal so groß wie der Radius R2 des zweiten Laserstrahls 12 an der engsten Stelle. Der erste Laserstrahl 11 hat hier ein ca. 4,5-mal größeres Strahlparameterprodukt SPP1 als der zweite Laserstrahl 12 mit Strahlparameterprodukt SPP2.

### Bezugszeichenliste

- 1: Schmelzbad
- 2: Werkstück
- 3: Laserschweißvorrichtung
- 4: Strahlachse
- 5: Fokussieroptik
- 6: Dampfkapillare
- 7: Öffnung
- 8: erste Absorption/Reflektion (zweiter Laserstrahl)
- 9: oberes Viertel (Dampfkapillare)
- 11: erster Laserstrahl
- 12: zweiter Laserstrahl
- 13: Verfahrtisch
- 14: Fokus
- 16: Strahlfalle
- 20: Strahlteiler-Element
- 21: erste Laserquelle
- 22: Lichtleitfaser (Laserfaser)
- 23: zweite Strahlquelle
- 24: Lichtleitfaser (Laserfaser)
- 25: erste Kollimieroptik
- 26: zweite Kollimieroptik
- 27: Schweißplatz
- 28: Gesamtstrahl
- 29: Fokussieroptik
- 30: 2-in-1-Faser
- 30a: Faserende (2-in-1-Faser)
- 31: Kernfaser
- 32: Ringfaser
- 33: gemeinsame Laserquelle
- 34: Ur-Laserstrahl
- 35: Keilplatte
- 36: Strahlachse (Ur-Laserstrahl)
- 37: zweiter Strahlungsanteil (Teil des Ur-Laserstrahls)
- 38: erster Strahlungsanteil (Teil des Ur-Laserstrahls)
- 40: Dual-Core-Faser
- 41: Lichtleitfaser (Laserfaser)
- 41a: Faserende
- 42: Lichtleitfaser (Laserfaser)
- 42a: Faserende
- 43: gemeinsame Optik
- 44: Kollimierlinse
- 45: Fokussierlinse
- B1: erste Strahlbreite
- B2: zweite Strahlbreite
- G2: größte Breite des zweiten Laserstrahls im oberen Viertel
- K1: kleinste Breite des ersten Laserstrahls im oberen Viertel
- KB: Kapillarbreite
- OE: Werkstückoberflächenebene
- SR: Schweißrichtung
- W1: erster Fokussierwinkel
- W2: zweiter Fokussierwinkel

## Patentansprüche

1. Verfahren zum Tiefschweißen eines Werkstücks (2),
wobei mit einem ersten Laserstrahl (11) und einem zweiten Laserstrahl (12) eine Oberfläche des Werkstücks (2) bestrahlt wird,
wobei in einer Werkstückoberflächenebene (OE) eine erste Strahlbreite B1 des ersten Laserstrahls (11) größer ist als eine zweite Strahlbreite B2 des zweiten Laserstrahls (12),
und wobei zumindest in der Werksstückoberflächenebene (OE) der zweite Laserstrahl (12) innerhalb des ersten Laserstrahls (11) liegt, wobei die Intensität des ersten Laserstrahls (11) allein ausreicht, um eine Dampfkapillare (6) im Werkstück (2) zu erzeugen,
und wobei die im Werkstück (2) erzeugte Dampfkapillare (6) in der Werkstückoberflächenebene (OE) eine Kapillarbreite KB aufweist, wobei KB im Wesentlichen genauso groß ist wie B1, und weiter gilt B2 ≤ 0,75*KB,
**dadurch gekennzeichnet,**
**dass** für einen ersten Fokussierwinkel W1 des ersten Laserstrahls (11) und einen zweiten Fokussierwinkel W2 des zweiten Laserstrahls (12) gilt: W2 ≥ W1.

2. Verfahren nach Anspruch 1, **dadurch gekennzeichnet, dass** der erste Laserstrahl (11) und der zweite Laserstrahl (12) bezüglich einer z-Richtung, die senkrecht zur Oberfläche des Werkstücks (2) verläuft, die gleiche Fokuslage oder um weniger als 1mm voneinander beabstandete Fokuslagen haben.

3. Verfahren nach einem der vorhergehenden Ansprüche, **dadurch gekennzeichnet, dass** die Fokuslagen des ersten und zweiten Laserstrahls (11, 12) in der Werkstückoberflächenebene (OE) oder unterhalb der Werkstückoberfläche innerhalb der Dampfkapillare (6) liegen.

4. Verfahren nach einem der vorhergehenden Ansprüche, **dadurch gekennzeichnet, dass** der zweite Laserstrahl (12) eine bessere Strahlqualität aufweist als der erste Laserstrahl (11),
insbesondere mit SPP1 ≥ 2*SPP2, bevorzugt SPP1 ≥ 4*SPP2,
mit SPP1: Strahlparameterprodukt des ersten Laserstrahls (11), und SPP2: Strahlparameterprodukt des zweiten Laserstrahls (12).

5. Verfahren nach einem der vorhergehenden Ansprüche, **dadurch gekennzeichnet, dass** für eine erste Laserleistung L1 des ersten Laserstrahls (11) und eine zweite Laserleistung L2 des zweiten Laserstrahls (12) gilt: L2 ≥ L1, bevorzugt L2 ≥ 2*L1.

6. Verfahren nach einem der vorhergehenden Ansprüche, **dadurch gekennzeichnet, dass** für eine kleinste Breite KD der Dampfkapillare (6) im oberen, werkstückoberflächennahen Viertel (9) der Dampfkapillare (6) und für eine größte Breite G2 des zweiten Laserstrahls (12) in dem oberen Viertel (9) der Dampfkapillare (6) gilt: 0,8*KD ≥ G2, bevorzugt 0,6*KD ≥ G2.

7. Verfahren nach einem der vorhergehenden Ansprüche, **dadurch gekennzeichnet, dass** der erste Laserstrahl (11) und der zweite Laserstrahl (12) koaxial mit einer gemeinsamen Strahlachse (4) ausgerichtet sind.

8. Verfahren nach Anspruch 7, **dadurch gekennzeichnet, dass** die gemeinsame Strahlachse (4) im Wesentlichen senkrecht zur Werkstückoberfläche verläuft.

9. Verfahren nach einem der Ansprüche 1 bis 8, **dadurch gekennzeichnet, dass** der erste und der zweite Laserstrahl (11, 12) in einer 2-in-1-Faser (30) mit einer Kernfaser (31) und einer Ringfaser (32) geführt werden, insbesondere wobei der erste Laserstrahl (11) in der Ringfaser (32) und der zweite Laserstrahl (12) in der Kernfaser (31) geführt wird,
dass der erste und zweite Laserstrahl (11, 12) vor dem Werkstück (2) aus einem Faserende (30a) der 2-in-1-Faser (30) austreten,
und dass das Faserende (30a) mit Ringfaser (32) und Kernfaser (31) mittels einer gemeinsamen Optik (43) in einem gemeinsamen Fokus (14) auf oder in das Werkstück (2) abgebildet wird, wodurch der erste und zweite Laserstrahl (11, 12) von der gemeinsamen Optik (43) auf das Werkstück (2) gerichtet werden,
insbesondere wobei die gemeinsame Optik (43) eine Kollimationslinse (44) und eine Fokussierlinse (45) umfasst, bevorzugt ausschließlich umfasst.

10. Verfahren nach Anspruch 9, **dadurch gekennzeichnet, dass** eine gemeinsame Laserquelle (33) einen Ur-Laserstrahl (34) erzeugt, wobei und ein erster Teil (38) des Ur-Laserstrahls (34) exzentrisch in die Ringfaser (32) eingekoppelt wird und den ersten Laserstrahl (11) bildet, und ein zweiter Teil (37) des Ur-Laserstrahls (34) in die Kernfaser (31) eingekoppelt wird und den zweiten Laserstrahl (12) bildet.

11. Verfahren nach einem der Ansprüche 1 bis 8, **dadurch gekennzeichnet, dass** eine erste Laserquelle (21) den ersten Laserstrahl (11) erzeugt und eine zweite Laserquelle (23) den zweiten Laserstrahl (12) erzeugt, und dass der erste Laserstrahl (11) und der zweite Laserstrahl (12) mittels eines Strahlteiler-Elements (20) überlagert werden.

12. Verfahren nach Anspruch 11, **dadurch gekennzeichnet, dass** die überlagerten Laserstrahlen (11, 12) mit einer gemeinsamen Fokussieroptik (29), insbesondere einer Fokussierlinse, auf das Werkstück (2) gerichtet werden.

13. Verfahren nach einem der Ansprüche 1 bis 6, **dadurch gekennzeichnet, dass** der erste und der zweite Laserstrahl (11, 12) in einer Dual-Core-Faser (40) mit zwei nebeneinander liegenden, zueinander parallelen Laserfasern (41, 42) geführt werden,
dass der erste und zweite Laserstrahl (11, 12) vor dem Werkstück (2) aus den Faserenden (41a, 42a) der Dual-Core-Faser (40) austreten, und dass die Faserenden (41a, 42a) der Laserfasern (41, 42) über eine gemeinsame Optik (43) in einem gemeinsamen Fokus (14) auf oder in dem Werkstück (2) abgebildet werden, wodurch der erste und zweite Laserstrahl (11, 12) von der gemeinsamen Optik (43) auf das Werkstück (2) gerichtet werden,
insbesondere wobei die gemeinsame Optik (43) eine Kollimationslinse (44) und eine Fokussierlinse (45) umfasst, bevorzugt ausschließlich umfasst.

## Claims

1. A method for deep penetration welding of a workpiece (2),
wherein a surface of the workpiece (2) is irradiated using a first laser beam (11) and a second laser beam (12),
wherein, in a workpiece surface plane (OE), a first beam width B1 of the first laser beam (11) is greater than a second beam width B2 of the second laser beam (12),
and wherein the second laser beam (12) is located inside the first laser beam (11) at least in the workpiece surface plane (OE),
wherein the intensity of the first laser beam (11) alone is sufficient to produce a keyhole (6) in the workpiece (2),
and wherein the keyhole (6) produced in the workpiece (2) has a capillary width KB in the workpiece surface plane (OE),
wherein KB is substantially equal to B1, and furthermore B2 ≤ 0.75*KB,
**characterized in that**
the following applies for a first focusing angle W1 of the first laser beam (11) and a second focusing angle W2 of the second laser beam (12): W2 ≥ W1.

2. The method as claimed in claim 1, **characterized in that** the first laser beam (11) and the second laser beam (12) have the same focal position or focal positions spaced apart from one another by less than 1 mm with respect to a z direction, which extends perpendicularly to the surface of the workpiece (2).

3. The method as claimed in any one of the preceding claims, **characterized in that** the focal positions of the first and second laser beams (11, 12) are located in the workpiece surface plane (OE) or below the workpiece surface inside the keyhole (6).

4. The method as claimed in any one of the preceding claims, **characterized in that** the second laser beam (12) has a better beam quality than the first laser beam (11), in particular with SPP1 ≥ 2*SPP2, preferably SPP1 ≥ 4*SPP2, where SPP1: beam parameter product of the first laser beam (11) and SPP2: beam parameter product of the second laser beam (12).

5. The method as claimed in any one of the preceding claims, **characterized in that** the following applies for a first laser power L1 of the first laser beam (11) and a second laser power L2 of the second laser beam (12): L2 ≥ L1, preferably L2 ≥ 2*L1.

6. The method as claimed in any one of the preceding claims, **characterized in that** the following applies for a smallest width KD of the keyhole (6) in the top quarter (9), which is close to the workpiece surface, of the keyhole (6) and for a greatest width G2 of the second laser beam (12) in the top quarter (9) of the keyhole (6) : 0.8*KD ≥ G2, preferably 0.6*KD ≥ G2.

7. The method as claimed in any one of the preceding claims, **characterized in that** the first laser beam (11) and the second laser beam (12) are aligned coaxially having a common beam axis (4).

8. The method as claimed in claim 7, **characterized in that** the common beam axis (4) extends substantially perpendicularly to the workpiece surface.

9. The method as claimed in any one of claims 1 to 8, **characterized in that** the first and second laser beams (11, 12) are guided in a 2-in-1-fiber (30) having a core fiber (31) and a ring fiber (32),
in particular wherein the first laser beam (11) is guided in the ring fiber (32) and the second laser beam (12) is guided in the core fiber (31),
the first and second laser beams (11, 12) exit from a fiber end (30a) of the 2-in-1-fiber (30) before the workpiece (2),
and the fiber end (30a) having ring fiber (32) and core fiber (31) is imaged by means of a common optical unit (43) in a common focus (14) on or in the workpiece (2), whereby the first and second laser beams (11, 12) are directed by the common optical unit (43) onto the workpiece (2),
in particular wherein the common optical unit (43) comprises a collimation lens (44) and a focusing lens (45), preferably exclusively comprises them.

10. The method as claimed in claim 9, **characterized in that** a common laser source (33) generates an original laser beam (34), wherein a first part (38) of the original laser beam (34) is eccentrically coupled into the ring fiber (32) and forms the first laser beam (11), and a second part (37) of the original laser beam (34) is coupled into the core fiber (31) and forms the second laser beam (12).

11. The method as claimed in any one of claims 1 to 8, **characterized in that** a first laser source (21) generates the first laser beam (11) and a second laser source (23) generates the second laser beam (12), and
the first laser beam (11) and the second laser beam (12) are superimposed by means of a beam splitter element (20).

12. The method as claimed in claim 11, **characterized in that** the superimposed laser beams (11, 12) are directed onto the workpiece (2) using a common focusing optical unit (29), in particular a focusing lens.

13. The method as claimed in any one of claims 1 to 6, **characterized in that** the first and the second laser beams (11, 12) are guided in a dual-core fiber (40) having two laser fibers (41, 42) located adjacent to one another and parallel to one another,
the first and second laser beams (11, 12) exit from the fiber ends (41a, 42a) of the dual-core fiber (40) before the workpiece (2),
and the fiber ends (41a, 42a) of the laser fibers (41, 42) are imaged via a common optical unit (43) in a common focus (14) on or in the workpiece (2), whereby the first and second laser beams (11, 12) are directed by the common optical unit (43) onto the workpiece (2),
in particular wherein the common optical unit (43) comprises a collimation lens (44) and a focusing lens (45), preferably exclusively comprises them.

## Revendications

1. Procédé de soudage profond d'une pièce (2),
dans lequel une surface de la pièce (2) est irradiée par un premier faisceau laser (11) et un deuxième faisceau laser (12),
dans lequel, dans un plan de surface de pièce (OE), une première largeur de faisceau B1 du premier faisceau laser (11) est supérieure à une deuxième largeur de faisceau B2 du deuxième faisceau laser (12),
et dans lequel, au moins dans le plan de surface de pièce (OE), le deuxième faisceau laser (12) se trouve à l'intérieur du premier faisceau laser (11),
dans lequel l'intensité du premier faisceau laser (11) suffit à elle seule pour générer un capillaire de vapeur (6) dans la pièce (2),
et dans lequel le capillaire de vapeur (6) généré dans la pièce (2) présente une largeur de capillaire KB dans le plan de surface de pièce (OE),
dans lequel KB est sensiblement aussi grand que B1 et en outre B2 ≤ 0,75*KB,
**caractérisé en ce**
**que** pour un premier angle de focalisation W1 du premier faisceau laser (11) et un deuxième angle de focalisation W2 du deuxième faisceau laser (12), on a : W2 ≥ W1.

2. Procédé selon la revendication 1, **caractérisé en ce que** le premier faisceau laser (11) et le deuxième faisceau laser (12) ont la même position focale ou des positions focales espacées l'une de l'autre de moins de 1 mm par rapport à une direction z qui s'étend perpendiculairement à la surface de la pièce (2).

3. Procédé selon l'une des revendications précédentes, **caractérisé en ce que** les positions focales des premier et deuxième faisceaux laser (11, 12) se situent dans le plan de surface de pièce (OE) ou sous la surface de pièce à l'intérieur du capillaire de vapeur (6).

4. Procédé selon l'une des revendications précédentes, **caractérisé en ce que** le deuxième faisceau laser (12) présente une meilleure qualité de faisceau que le premier faisceau laser (11), en particulier avec SPP1 ≥ 2*SPP2, de préférence SPP1 ≥ 4*SPP2, avec SPP1 : produit des paramètres de faisceau du premier faisceau laser (11) et SPP2 : produit des paramètres de faisceau du deuxième faisceau laser (12).

5. Procédé selon l'une des revendications précédentes, **caractérisé en ce que** pour une première puissance laser L1 du premier faisceau laser (11) et une deuxième puissance laser L2 du deuxième faisceau laser (12), on a : L2 ≥ L1, de préférence L2 ≥ 2*L1.

6. Procédé selon l'une des revendications précédentes, **caractérisé en ce que** pour une largeur minimale KD du capillaire de vapeur (6) dans le quart supérieur (9) du capillaire de vapeur (6) proche de la surface de pièce et pour une largeur maximale G2 du deuxième faisceau laser (12) dans le quart supérieur (9) du capillaire de vapeur (6), on a : 0,8*KD ≥ G2, de préférence 0,6*KD ≥ G2.

7. Procédé selon l'une des revendications précédentes, **caractérisé en ce que** le premier faisceau laser (11) et le deuxième faisceau laser (12) sont orientés coaxialement à un axe de faisceau commun (4).

8. Procédé selon la revendication 7, **caractérisé en ce que** l'axe de faisceau commun (4) est sensiblement perpendiculaire à la surface de pièce.

9. Procédé selon l'une des revendications 1 à 8, **caractérisé en ce**
**que** les premier et deuxième faisceaux laser (11, 12) sont guidés dans une fibre 2 en 1 (30) comportant une fibre centrale (31) et une fibre annulaire (32), en particulier dans lequel le premier faisceau laser (11) est guidé dans la fibre annulaire (32) et le deuxième faisceau laser (12) dans la fibre centrale (31), que les premier et deuxième faisceaux laser (11, 12) sortent d'une extrémité de fibre (30a) de la fibre 2 en 1 (30) devant la pièce (2),
et **que** l'extrémité de fibre (30a) avec la fibre annulaire (32) et la fibre centrale (31) est reproduite sur ou dans la pièce (2) à un foyer commun (14) au moyen d'une optique commune (43), de sorte que les premier et deuxième faisceaux laser (11, 12) sont dirigés sur la pièce (2) par l'optique commune (43),
en particulier dans lequel l'optique commune (43) comprend, de préférence exclusivement, une lentille de collimation (44) et une lentille de focalisation (45).

10. Procédé selon la revendication 9, **caractérisé en ce qu'**une source laser commune (33) génère un faisceau laser primaire (34), dans lequel une première partie (38) du faisceau laser primaire (34) est couplée de manière excentrée dans la fibre annulaire (32) et forme le premier faisceau laser (11), et une deuxième partie (37) du faisceau laser primaire (34) est couplée dans la fibre centrale (31) et forme le deuxième faisceau laser (12).

11. Procédé selon l'une des revendications 1 à 8, **caractérisé en ce qu'**une première source laser (21) génère le premier faisceau laser (11) et une deuxième source laser (23) génère le deuxième faisceau laser (12), et
que le premier faisceau laser (11) et le deuxième faisceau laser (12) sont superposés au moyen d'un élément diviseur de faisceau (20).

12. Procédé selon la revendication 11, **caractérisé en ce que** les faisceaux laser superposés (11, 12) sont dirigés sur la pièce (2) au moyen d'une optique de focalisation commune (29), en particulier d'une lentille de focalisation.

13. Procédé selon l'une des revendications 1 à 6, **caractérisé en ce**
**que** le premier et le deuxième faisceau laser (11, 12) sont guidés dans une fibre à double noyau (40) avec deux fibres laser (41, 42) situées l'une à côté de l'autre et parallèles l'une à l'autre,
**que** le premier et le deuxième faisceau laser (11, 12) sortent des extrémités de fibre (41a, 42a) de la fibre à double noyau (40) devant la pièce (2)
et **que** les extrémités de fibre (41a, 42a) des fibres laser (41, 42) sont reproduites sur ou dans la pièce (2) à un foyer commun (14) au moyen d'une optique commune (43), de sorte que les premier et deuxième faisceaux laser (11, 12) sont dirigés sur la pièce (2) par l'optique commune (43),
en particulier dans lequel l'optique commune (43) comprend, de préférence exclusivement, une lentille de collimation (44) et une lentille de focalisation (45).
